# EUROPEAN PATENT APPLICATION

(11) **EP 4 148 387 A1**
(43) Date of publication of application: **15.03.2023**
(21) Application number: 21196108.1
(22) Date of filing: 10.09.2021
(51) Int. Cl.: G01C 21/20, B63B 49/00

(54) **PREDICTED COURSE DISPLAY DEVICE AND METHOD**

(71) Applicant: FURUNO ELECTRIC CO., LTD., Nishinomiya-City, Hyogo 662-8580 (JP)
(72) Inventor: IZUMIKAWA, Masaya, Nishinomiya-City (JP); IMANAKA, Kazunari, Nishinomiya-City (JP)
(74) Representative: Müller Hoffmann & Partner

(57) **Abstract**

A predicted course display device (1) for a movable body (11) includes an interface module (184) to receive a planned route (202) of the movable body (11), a position measurement module (181) to detect a current position of the movable body (11), a geographical information selection module (182) to determine geographic information of a region surrounding the movable body (11) that is to be displayed on a display screen (21), a tidal current information reception module (183) to receive tidal current information of the region surrounding the movable body (11), a course prediction module (185) to predict a course (204) of the movable body (11) based on the tidal current information, and a course information generation module (186) to generate display information for showing the planned route (202) and the predicted course (204) corresponding to a specific position on the display screen (21).

## Description

### BACKGROUND OF THE INVENTION

### Technical field

The present disclosure mainly relates to a marine navigation system with augmented reality, and more specifically to a predicted course display device and method for navigation of a movable body on water using augmented reality.

### Description of the related art

A conventional navigation system provides information regarding a planned route to be navigated by a marine vessel. Tides and other external disturbance factors, for example, wind, have been known to influence an actual course of the marine vessel on water, which results in deviation from the planned route. Vessel navigating personnel, for example, captain, crew, or other navigating personnel on-board the marine vessel may be unaware of difference between the actual course and the planned route. The vessel navigating personnel is required to continuously adjust the marine vessel based on a current location of the marine vessel and the influence of each tide on the actual course of the marine vessel. The continuous adjustment of the marine vessel by the vessel navigating personnel may result in accidents or collisions due to tiredness or carelessness of the vessel navigating personnel.

Various Augmented Reality (AR) based navigation systems have been developed in the past for assisting in the navigation of marine vessels. Traditionally, these systems have been depicting tidal information, for example, conditions associated with a tidal current at a predetermined position in relation to a current position of the marine vessel. Such geographical conditions when estimated can facilitate the vessel navigating personnel in monitoring operation of, and navigating, the marine vessel based on the influence of tides. For example, using the information pertaining to such geographical conditions, the vessel navigating personnel can steer the marine vessel *i.e.,* by adjusting a heading direction of the marine vessel effectively and in a timely manner, if needed, so that the heading direction is, for instance, based on the direction of the tidal current. However, the vessel navigating personnel is required to continuously assume the effect of tides from the information and adjust the marine vessel.

Moreover, existing conventional Augmented Reality (AR) based navigation systems can display image information captured by an image sensor (camera) and information about surrounding ships and land acquired based on information captured by a sensor such as a radar. However, they are unable to provide the vessel navigating personnel with any visual information indicating the deviation of the actual course of the marine vessel from the planned route. Thus, the vessel navigating personnel is unable to navigate the ship properly on the planned route. For the aforementioned reasons, there is a need for providing a system and method that overcomes the problems of the conventional Augmented Reality (AR) based navigation systems and facilitates the vessel navigating personnel to navigate the marine vessel effectively.

### SUMMARY OF THE INVENTION

In an embodiment of the present disclosure, there is provided a predicted course display device for a movable body. The predicted course display device includes an interface module, a position measurement module, a geographical information selection module, a tidal current information reception module, a course prediction module, and a course information generation module. The interface module is configured to receive a planned route of the movable body. The position measurement module is configured to detect a current position of the movable body. The geographical information selection module is configured to determine geographic information of a region surrounding the movable body. The geographic information is to be displayed on a display screen. The tidal current information reception module is configured to receive tidal current information of the region surrounding the movable body, from one of: an external communication equipment and one or more sensors attached to the movable body. The course prediction module is configured to predict a course of the movable body based on the tidal current information. The course information generation module is configured to generate display information for showing the planned route and the predicted course corresponding to a specific position on the display screen.

Additionally, or optionally, the course prediction module is further configured to predict the course of the movable body based on the current position of the movable body.

Additionally, or optionally, the interface module is further configured to receive at least one of: heading information, speed information, rudder angle information, and hull information of the movable body. The course prediction module is further configured to predict the course of the movable body based on the at least one: of heading information, speed information, rudder angle information, and hull information.

Additionally, or optionally, the course information generation module is configured to generate the display information by superimposing the planned route and the predicted course corresponding to the specific position on the display screen.

Additionally, or optionally, the predicted course display device further includes a communication module configured to transmit the display information to one or more external devices.

Additionally, or optionally, the predicted course display device further includes an error detection module configured to detect an error between the planned route and the predicted course, and issue an alert when the detected error exceeds a predetermined threshold.

Additionally, or optionally, the predicted course display device further includes an autonomous control module configured to control the movable body autonomously. The course prediction module is further configured to trigger the autonomous control module to control the movable body autonomously when the detected error is within a predetermined range.

Additionally, or optionally, the predicted course display device further includes an autonomous control module configured to control the movable body autonomously. The course prediction module is further configured to stop the autonomous control module to control the movable body autonomously when the detected error is out of a predetermined range.

Additionally, or optionally, the alert is issued by way of at least one of: a display notification on the display screen and an audio notification on an audio equipment of the user.

Additionally, or optionally, the course information generation module is further configured to generate the display information for showing a tidal arrow having a direction indicated by the tidal current information.

Additionally, or optionally, a length of the tidal arrow displayed is based on a speed of corresponding tidal current information.

Additionally, or optionally, the tidal arrow is displayed as a compass-based mark having a direction panel.

Additionally, or optionally, the course information generation module is further configured to generate the display information for showing one or more segments of the planned route.

Additionally, or optionally, the interface module is further configured to receive a viewpoint from a user. The course information generation module is further configured to rotate the display information based on the viewpoint.

Additionally, or optionally, the predicted course display device further includes an image sensor attached onto the movable body, and configured to capture an image, and output image data. The course information generation module is further configured to generate display information for showing the planned route and the predicted course corresponding to the image data, superimpose the image data and the display information to generate a superimposed image based on augmented reality, and generate display data for displaying the superimposed image on the display screen.

In another aspect of the present disclosure, there is provided a predicted course display method. The predicted course display method includes, receiving a planned route of a movable body, detecting a current position of a movable body, determining geographic information of a region surrounding the movable body that is to be displayed on a display screen, receiving tidal current information of the region surrounding the movable body, from one of: an external communication equipment and one or more sensors attached to the movable body, predicting a course of the movable body based on the tidal current information, and generating display information for showing the planned route and the predicted course corresponding to a specific position on the display screen.

In yet another aspect of the present disclosure, there is provided a non-transitory computer readable medium having stored thereon computer-executable instructions which, when executed by a computer, cause the computer to receive a planned route of a movable body, detect a current position of a movable body, determine geographic information of a region surrounding the movable body that is to be displayed on a display screen, receive tidal current information of the region surrounding the movable body, from one of: an external communication equipment and one or more sensors attached to the movable body, predict a course of the movable body based on the tidal current information, and generate display information for showing the planned route and the predicted course corresponding to a specific position on the display screen.

### Effects of the invention

The problem of not being able to display visual information that can be intuitively used by the vessel navigating personnel to navigate the ship properly on the planned route is solved by using a predicted course display device that depicts difference between the planned route and the predicted course of the marine vessel in relation to the current position of the ship, especially under the influence of tides and other external disturbance factors. Accordingly, the predicted course display device of the present disclosure offers to present the difference between the planned route and the predicted course of the marine vessel to the navigating personnel for use in a highly intuitive manner to navigate the ship properly on the planned route.

### BRIEF DESCRIPTION OF DRAWINGS

The illustrated embodiments of the subject matter will be best understood by reference to the drawings, wherein like parts are designated by like numerals throughout. The following description is intended only by way of example, and simply illustrates certain selected embodiments of devices, systems, and processes that are consistent with the subject matter as claimed herein:
**FIG. 1** is a block diagram illustrating an entire configuration of a predicted course display device for a movable body in which an image sensor is attached to the movable body according to one embodiment of the present disclosure;
**FIG. 2** illustrates a superimposed image of a region including the movable body and showing a planned route, a predicted course of the movable body, and a tidal arrow displayed on a display screen of the predicted course display device;
**FIG. 3** illustrates an enlarged view of the superimposed image of **FIG. 2** showing a tidal arrow displayed as a compass-based mark;
**FIG. 4** illustrates a bird view image of the region including the movable body and showing the planned route, the predicted course and the tidal arrow; and
**FIG. 5** is a flow chart illustrating a predicted course display method in accordance with an embodiment of the present disclosure.

### DETAILED DESCRIPTION OF THE EMBODIMENTS

Example apparatus are described herein. Other example embodiments or features may further be utilized, and other changes may be made, without departing from the spirit or scope of the subject matter presented herein. In the following detailed description, reference is made to the accompanying drawings, which form a part thereof.

The example embodiments described herein are not meant to be limiting. It will be readily understood that the aspects of the present disclosure, as generally described herein, and illustrated in the drawings, can be arranged, substituted, combined, separated, and designed in a wide variety of different configurations, all of which are explicitly contemplated herein.

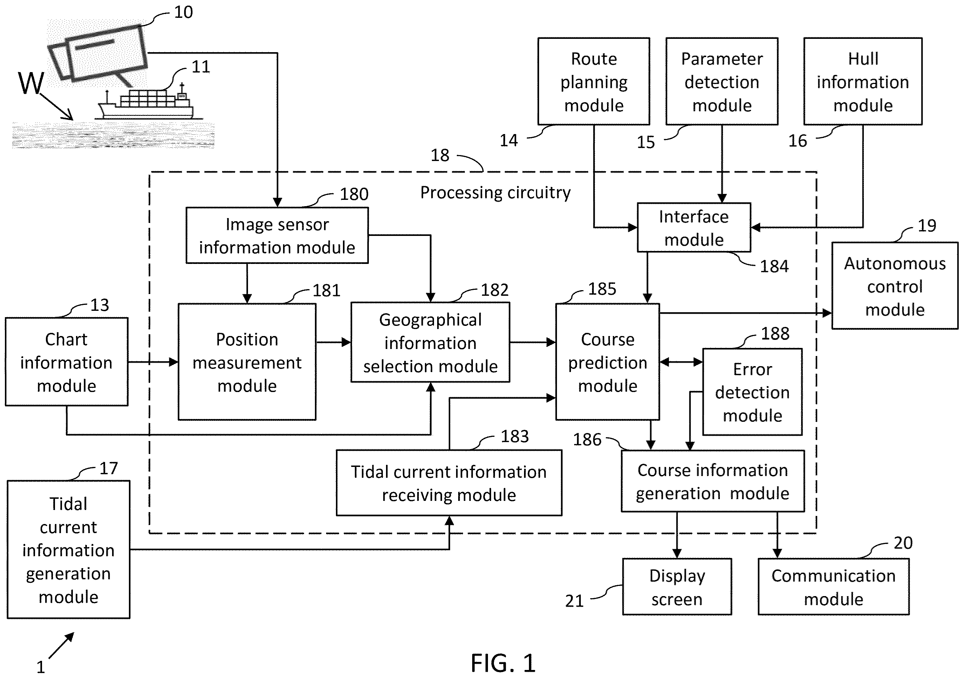

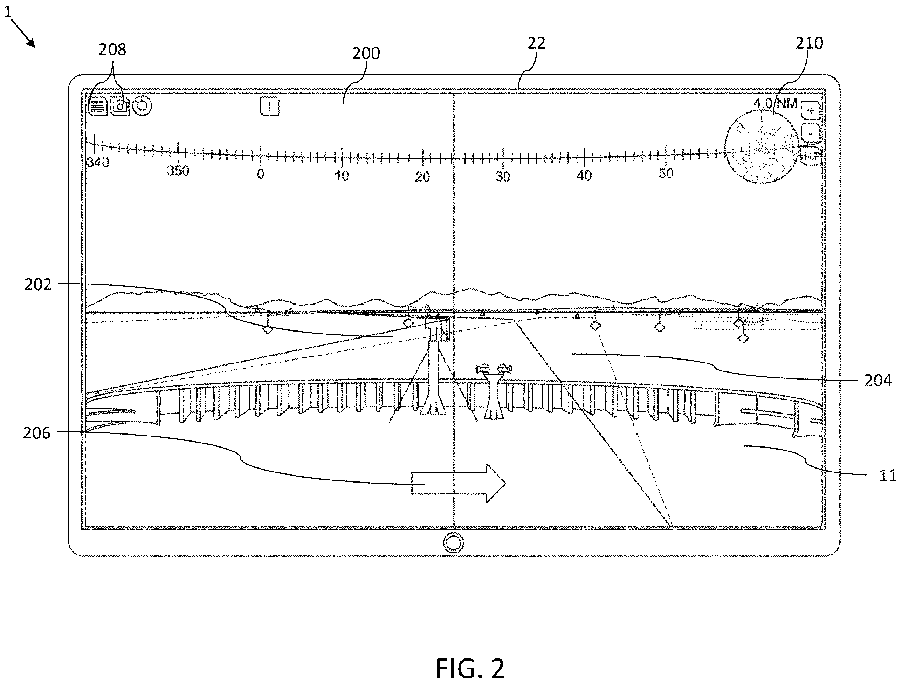

**FIG. 1** is a block diagram illustrating an entire configuration of a predicted course display device **1** in which an image sensor **10** (hereinafter also referred to as a camera **10)** is attached to a movable body **11** (hereinafter also referred to as a ship **11),** according to one embodiment of the present disclosure. **FIG. 2** illustrates a superimposed image **200** of a region including the movable body **11** and showing a planned route **202,** a predicted course **204** of the movable body **11,** and a tidal arrow **206** indicating information associated with tidal currents.

Next, mainly referring to **FIG. 1****,** the predicted course display device **1** includes the image sensor **10,** a chart information module **13,** a route planning module **14,** a parameter detection module **15,** a hull information module **16,** a tidal current information generation module **17,** processing circuitry **18,** an autonomous control module **19,** a communication module **20,** and a display screen **21.**

The predicted course display device **1** may be located on-board the ship **11** and provided with, or in electrical connection to, the camera **10** on the ship **11,** as the ship instrument for purposes as will be explained in detail later herein.

The camera **10** may be configured as, for example, a limited-viewing angle or a wide-angle video camera which images a water surface **W** in the vicinity, or around at least a portion of the perimeter of the ship **11.** This camera **10** may have a live output function, capable of generating video data (image data) as the imaged result in real time, and outputting it to the display screen **21.** As illustrated in **FIG. 1****,** the camera **10** may be installed in the ship **11** so that an imaging direction generally faces onto the water surface **W** forward of a hull of the ship **11.**

The camera **10** may be attached to the ship **11** through a rotating mechanism (not illustrated) and, therefore, the imaging direction can be changed in a given angle range on the basis of the hull of the ship **11,** for example, by inputting one or more commands via the predicted course display device **1** for instructing a panning/tilting of the camera **10.**

The display screen **21** is configured to display the superimposed image **200** (hereinafter also referred to as an image **200)** expressing the situation around the movable body **11** using Augmented Reality (AR) based on, among other things, a current position of the ship **11** as will be explained later herein, and superimposing the planned route **202** and the predicted course **204** of the movable body **11** on the image **200** along with the tidal arrow **206.** The planned route **202** is a predetermined path to be followed by the ship **11** to navigate and reach a predetermined position. The predicted course 204 is a path on which the ship 11 is predicted to be moving forward.

The display screen 21 may be configured as, for example, a display screen that forms part of a navigation assisting device to which a ship operator, *i.e.,* a user, who operates the ship 11 refers. However, the display screen 21 is not limited to the above configuration, and, for example, it may be a display screen for a portable computer which is carried by a ship operator's assistant who monitors the surrounding situation from the ship 11, a display screen for a passenger to watch in the cabin of the ship **11,** or a display part for a head mounted display, such as a wearable glass, worn by a passenger.

Although, the camera **10,** and the display screen **21** are shown to be an integral part of the predicted course display device **1,** it would be apparent to one of ordinary skill in the art, that the camera **10,** and the display screen **21** may be external to the predicted course display device **1.** The camera **10,** the display screen **21** and the predicted course display device **1** may integrally form an Augmented Reality (AR) based navigation apparatus that autonomously, or at least semi-autonomously facilitates a user to, navigate the ship **11** across the sea. The AR based navigation apparatus enables the user to navigate the ship **11** by superimposing the planned route **202** and the predicted course **204** of the ship **11,** in real-time, on live images of surroundings of the ship **11** in a manner which is easy for a user to comprehend.

The predicted course display device **1** may also be operably coupled with variety of peripheral devices including, but not limited to, a keyboard and a mouse which the user may operate for performing various functions pursuant to functionalities in the present disclosure. For example, the user can provide various kinds of instructions to the AR based predicted course display device **1** and the camera **10** about generation of an image by operating the keyboard and/or the mouse. The instructions may include the pan/tilt operation of the camera **10,** setting of displaying or not-displaying of various types of information, and a setup of a viewpoint from which the image is captured.

The chart information module **13** may be configured to receive and store the global geographical map, or another specified geographical map for a region, based on electronic nautical chart information that may be known beforehand to the chart information module **13.**

The route planning module **14** is configured to generate and store a plurality of routes for navigation of the ship **11.** In one embodiment, the user may operate the peripheral devices operably coupled with the predicted course display device **1** for performing various functions pursuant to functionalities in the present disclosure. For example, the user can provide various kinds of instructions to the AR based predicted course display device 1 about a source and a destination for navigation of the ship **11** by operating the keyboard and/or the mouse. Based on the information obtained from the user, such as the source and the destination, the route planning module **14** may generate and provide one or more routes for navigation of the ship **11** from the source to the destination. In one embodiment, each route may be associated with route information that may include, at least one of: date and time of travel, weather conditions, tidal conditions, and the like. The route planning module **14** receives a user input from the user regarding selection of a route as the planned route **202** for navigation of the ship **11** from the source to the destination. It will be apparent to person skilled in the art that although in the present embodiment, the user selects the route for travelling, in an alternate embodiment, an optimal route may be selected by the route planning module **14** based on current weather conditions, time of travel, tidal conditions, and the like.

The parameter detection module **15** is configured to detect various parameters of the movable body **11** such as the heading direction in which a nose of the ship **11** is pointed, a speed of the ship **11,** and a rudder angle. Based on the detection of the various parameters of the ship **11,** the parameter detection module **15** is further configured to generate heading information, speed information, and rudder angle information of the ship **11.** The heading information indicates a compass direction, *i.e.,* the heading direction in which the nose of the ship **11** is pointed. The speed information indicates the speed of the ship **11.** In one embodiment, the speed information indicates the speed of the ship **11** in real-time. In another embodiment, the speed information indicates the speed of the ship **11** at pre-defined time intervals. The rudder angle information indicates the rudder angle, *i.e.,* an angular position of a rudder blade of the ship **11.**

The parameter detection module **15** may be operably coupled with, and hence in communication with, one or more sensors and/or indicators, such as a direction sensor, a speed indicator, and a rudder angle indicator, to generate the heading information, the speed information, and the rudder angle information. The hull information module **16** is configured to store hull information that includes at least one of: a breadth, a draft, a freeboard, a length at waterline, a length between perpendiculars, and an overall length of a hull of the ship **11.**

The tidal current information generation module **17** is configured to generate tidal current information of a region surrounding the ship **11** such that the tidal current information including at least one of: a speed of a tide, a direction of the tide, and a position of the tide on the water surface **W.** The tidal current information generation module **17** may include an external communication equipment, for example, a land station, a Global Navigation Satellite System (GNSS) receiver, an Electronic Chart Display and Information System (ECDIS), an Automated Identification System (AIS) receiver, a radar device, or other peripheral devices that form part of the on-board ship equipment for detecting tides and/or measuring their pertinent tidal current information. In addition to the position of the tide, the tidal current information may further include a present speed and direction of the tide, or a speed and direction of the tide at an estimated (future) time, *i.e.,* when the ship 11 is estimated to reach the predetermined position of the tide as will be evident from the appended disclosure.

With continued reference to **FIG. 1****,** the processing circuitry **18** includes an image sensor information module **180,** a position measurement module **181,** a geographical information selection module **182,** a tidal current information receiving module **183,** an interface module **184,** a course prediction module **185,** a course information generation module **186,** and an error detection module **188.**

The image sensor information module **180** may be configured to receive an image captured by the image sensor **10,** and output image data corresponding to the captured image to the display screen **21.** Further, the image sensor information module **180** may also be configured to receive and store image sensor information including a position and an azimuthal orientation of the image sensor **10** with respect to a reference axis of a global geographical map. The image sensor **10** is installed on the ship **11.** While capturing images (and for sake of clarity in this disclosure), a position of the image sensor **10** may be assumed to be deduced from, for example, the current position of the ship **11** in the map and the azimuthal orientation of the image sensor **10** may be assumed from, for example, a heading direction of the ship **11** with respect to a meridian plane.

The position measurement module **181** is configured to detect a current position of the ship **11.** To do so, the position measurement module **181** may determine positional information of the ship **11.** The position measurement module **181** is configured to detect the current position of the ship **11** via any external equipment, for example, a land station or an on-board sensing system such as, but not limited to, a Global Navigation Satellite System (GNSS) receiver, an Electronic Chart Display and Information System (ECDIS), an Automated Identification System (AIS) receiver, a radar device, a sonar etc.

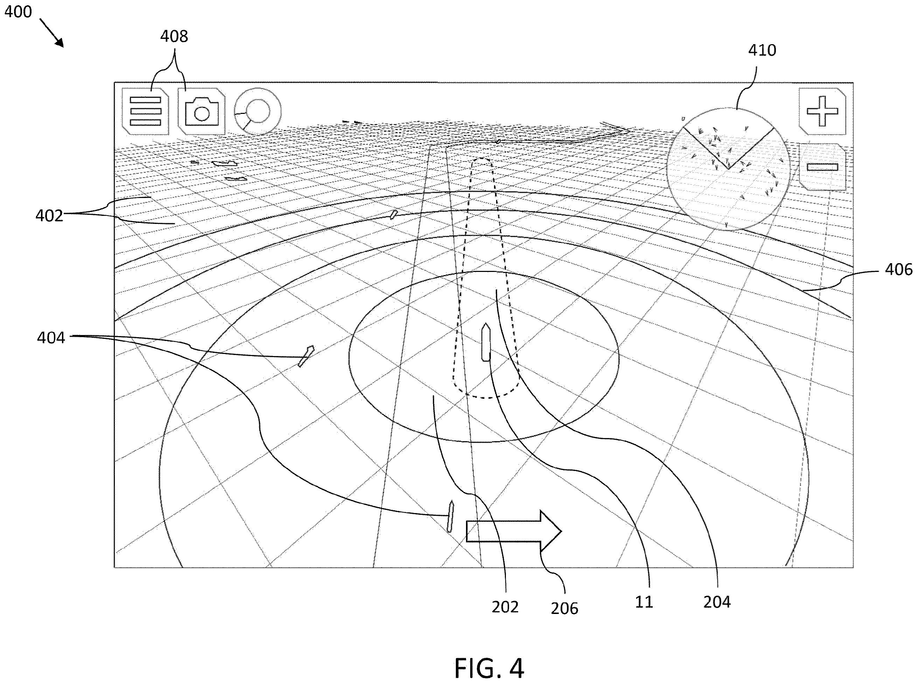

The geographical information selection module **182** is configured to determine geographic information of a region surrounding the ship **11.** The geographic information is to be displayed on the display screen **21.** In one embodiment, the geographic information may include the geographical map of the region surrounding the ship **11,** or a geographical map of a region corresponding to a field of view of the image sensor **10.** In another embodiment, the geographic information may include the image captured by the image sensor **10** that is attached to the ship **11.** In one example, the geographic information selection module **182** is further configured to determine a bird view image (shown later in **FIG. 4****)** of a region surrounding the ship **11.** The bird view image may be generated by computer graphics based on the image captured by the image sensor **10** and information received from the external equipment, such as the AIS receiver or the radar device. The bird view image illustrates a three-dimensional view of the region surrounding the ship **11.**

The tidal current information receiving module **183** is configured to receive and store the tidal current information of the region surrounding the ship **11.** The tidal current information receiving module **183** may be disposed in communication with the tidal current information generation module **17,** *i.e.,* one of: the external communication equipment and one or more sensors attached to the ship **11,** to receive the tidal current information based on the current position of the ship **11** detected by the position measurement module **181.**

The interface module **184** is operably coupled with the route planning module **14,** and configured to receive the route selected by the user as the planned route **202.** The interface module **184** is further operably coupled with the parameter detection module **15** and the hull information module **16,** and configured to receive at least one of: the heading information, the speed information, the rudder angle information, and the hull information of the ship **11.**

The course prediction module **185** is operably coupled with the tidal current information receiving module **183,** and configured to receive the tidal current information. The course prediction module **185** is configured to predict the course **204** of the movable body **11** based on the tidal current information. In one embodiment, the course prediction module **185** is further configured to predict the course **204** of the ship 11 based on the current position of the ship **11** received by the position measurement module **181.**

The course prediction module **185** is further operably coupled with the interface module **184,** and further configured to receive the planned route **202** and at least one of: the heading information, the speed information, the rudder angle information, and the hull information. In one embodiment, the course prediction module **185** is further configured to predict the course **204** of the ship **11** based on at least one of: the heading information, the speed information, the rudder angle information, and the hull information.

Referring to **FIGs. 1** and **2** together, the course information generation module **186** is configured to generate display data for displaying the superimposed image **200** on the display screen **21** for displaying the planned route **202** and the predicted course **204** of the ship **11** corresponding to a specific position on the display screen **21.** In one embodiment, as illustrated in **FIG. 2****,** the planned route **202** is a path to be followed by the ship **11** to navigate and reach the destination. In this embodiment, the course information generation module **186** is configured to generate display information for displaying the planned route **202** on the display screen **21** when the planned route **202** is received from the user. In a further embodiment, the planned route **202** is received from the user when a user performs a click operation. The term 'click operation' disclosed herein may be performed by the user using a tactile interface on the display screen **21** of the predicted course display device **1,** or alternatively, by use of other peripheral devices, for example, an input receiving module (not shown) such as a keyboard or a mouse that may be operably coupled with the predicted course display device **1.** The user may request the predicted course display device **1** to select one route from the one or more routes between the source and the destination as the planned route **202** to be displayed in the image **200** obtained from the image sensor **10.**

Additionally, referring to **FIGs. 1** and **2** together, the course information generation module **186** is configured to generate the display information for displaying the predicted course **204** corresponding to the current position of the movable body **11** and at least one of: the heading information, the speed information, the rudder angle information, and the hull information on the display screen **21.**

Additionally, in an embodiment, as illustrated in **FIG. 2****,** the predicted course **204** is a path predicted by the course prediction module **185** on which the ship **11** will be moving forward based on the current position of the ship **11** and at least one of: the heading information, the speed information, the rudder angle information, and the hull information associated with the ship **11.** In this embodiment, the course information generation module **186** is configured to generate the display information for displaying the predicted course **204** on the display screen **21** continuously or at predefined intervals.

Referring mainly to **FIG. 1****,** in embodiments herein and also as best shown in the view of **FIG. 2****,** the course information generation module **186** is generally configured to generate the display information for superimposing the planned route **202** and the predicted course **204** corresponding to the specific position on the display screen **21** and display the superimposed image **200** on the display screen **21.**

In an embodiment, the specific position disclosed herein may be any reference position on the display screen **21,** such as a position on the display screen **21** that display the ship **11.** In another embodiment, the specific position may include a pre-set position, for example, a center of the display screen **21.**

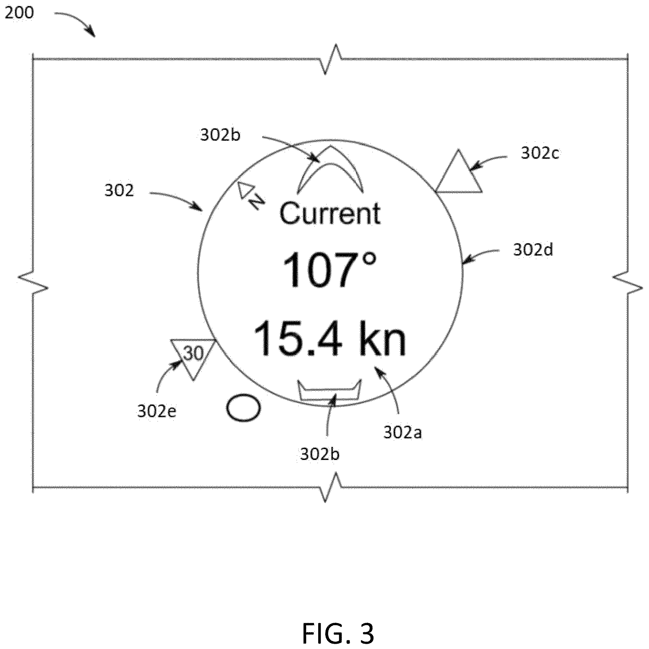

Furthermore, the course information generation module **186** is configured to generate the display information for showing the tidal arrow **206** for displaying on the display screen **21.** The tidal arrow **206** is displayed for indicating a direction of the tidal current, for example, an imminent/oncoming tide with respect to an estimated heading direction of the ship **11,** indicated by the tidal current information. A length of the tidal arrow **206** displayed is based on a speed of the tidal current indicated by the tidal current information, for example, the length of the tidal arrow **206** increases or decreases proportionally with respect to increase or decrease in the speed of the tidal current. In an embodiment, the tidal arrow **206** is displayed as a compass-based mark having a direction panel as shown in **FIG. 3****.** The direction panel indicates the direction of the tidal current obtained from the tidal current information.

Although it is disclosed herein that the tidal arrow **206** is used to depict the change in direction of the tide, or tidal current, encountered by the ship **11** currently, such a case is explanatory in nature and hence, non-limiting of this disclosure. In an alternative embodiment, the tidal arrow **206** may be indicative of an altogether different tide that is subsequent in position to a tide is being currently encountered by the ship **11.** Accordingly, it will be acknowledged by persons skilled in the art that alternate interpretations for the specific meanings of each symbol herein, for instance, the tidal arrow **206** may be possible in lieu of that disclosed herein without deviating from the spirit of the present disclosure.

**FIG. 3** illustrates an enlarged view of the superimposed image **200** showing the tidal arrow **206** displayed as the compass-based mark **302.** The compass-based mark **302** is configured for showing a gauge **302a** for including a speed and direction of the tidal current at the detected position of the movable body **11,** *i.e.,* when the moveable body **11** is directly above, or overhead with respect to, the tidal current, or stated differently, the tidal current is directly underneath the moveable body **11.**

Further, the compass-based mark **302** may also be configured to show another ship-shaped symbol **302b** for indicating an actual heading direction of the movable body **11.** The terms "actual heading direction" used herein may be regarded as the current, or present, heading direction of the ship **11.** Furthermore, the compass-based mark **302** may also be configured to show a first triangle-shaped indicator **302c,** *i.e.,* the direction panel, movable around a periphery **302d** of the gauge **302a** for dynamically indicating a direction of the tidal current with respect to the actual heading direction of the movable body **11.**

The compass-based mark **302** may also be configured to show a second triangle-shaped indicator **302e** fixed around the periphery **302d** of the gauge **302a** for indicating an estimated time, upon expiry of which, the direction of tidal current changes. By way of an example in **FIG. 4****,** the second triangle-shaped indicator **302e** is displaying a numeral '30' indicating that a direction of the tide, or the tidal current, would change from that depicted by way of the first triangle-shaped indicator **302c** to the direction depicted by the second triangle-shaped indicator **302e** and such change in direction of the tide would occur in a period of 30 minutes from a present time. The numeral "30" shall be counted down at a predefined interval, for example, each minute. In one example, the predefined interval may be set by a user, such as to count down the numeral "30" every 30 seconds, 1 minute, 10 minutes, or such combination, for example, from 30 minutes to 10 minutes, the predefined interval shall be 10 minutes, and within 10 minutes, the predefined interval shall be 1 minute.

Although it is disclosed herein that the second triangle-shaped indicator **302e** is used to depict the change in direction of the tide, or tidal current, and the concomitant time in which such change in direction is likely to occur, such a case is explanatory in nature and hence, non-limiting of this disclosure. In an alternative embodiment, the second triangle-shaped indicator **302e** may be indicative of an altogether different tide that is subsequent in position to a tide is being currently encountered by the ship **11** *i.e.,* as indicated by the first triangle-shaped indicator **302c.** Accordingly, it will be acknowledged by persons skilled in the art that alternate interpretations for the specific meanings of each symbol herein, for instance, the second triangle-shaped indicator **302e** may be possible in lieu of that disclosed herein without deviating from the spirit of the present disclosure.

With implementation of embodiments herein, the course information generation module **186** outputs the planned route **202,** the predicted course **204,** and the tidal arrow **206** to the display screen **21** for superimposing the planned route **202,** the predicted course **204,** and the tidal arrow **206** onto the image **200** that is captured by the image sensor **10** and for displaying the superimposed image **200** on the display screen **21** of the predicted course display device **1.** This way, the predicted course display device **1** of the present disclosure can beneficially provide visual information about the difference between the planned route **202** and the predicted course **204** along with the tidal arrow **206** in a manner that is easy for a user to visualize and comprehend therefrom. The user can thus adjust the navigation of the ship **11** to reduce the difference between the planned route **202** and the predicted course **204** based on the tidal arrow **206.**

In one embodiment, the course information generation module **186** generates the display information for showing the planned route **202** and the predicted course **204** corresponding to the image data outputted by the image sensor **10** that captures the image **200.** The course information generation module **186** superimposes the image data and the display information to generate the superimposed image **200** based on AR, and generates display data for displaying the superimposed image **200** on the display screen **21** for AR based navigation.

In another embodiment, the course information generation module **186** outputs the planned route **202,** the predicted course **204,** and the tidal arrow **206** to the display screen **21** for superimposing the planned route **202,** the predicted course **204,** and the tidal arrow **206** onto another image that has a different viewpoint than the image **200.** **FIG. 4** illustrates a bird view image **400** of the region including the movable body and showing the planned route, the predicted course and the tidal arrow. The bird view image **400** is a three-dimensional image and presents the region surrounding the ship **11** from a different viewing angle. The bird view image **400** is generated by utilizing computer graphics. In one embodiment, the user provides an instruction to the predicted course display device **1** and the camera **10** about a setup of a viewpoint from which the image is captured by operating the keyboard and/or the mouse. In the embodiment, the interface module **184** is receives the viewpoint from the user, and the course information generation module **186** rotates the display information based on the viewpoint. The course information generation module **186** provides the display information to the display screen **21** for displaying an image, such as the bird view image **400,** having the viewpoint received from the user.

The planned route **202,** the predicted course **204,** and the tidal arrow **206** are superimposed onto the bird view image **400** and the superimposed bird view image **400** is displayed on the display screen **21** of the predicted course display device 1. The bird view image **400** further includes grid lines **402** that represent a horizontal plane at the sea level, other ships **404** in the region surrounding the ship **11,** and range circles **406** that enable the user to visualize and track a distance of the other ships **404** from the ship **11.** The other ships **404** are displayed based on the information received from the external communication equipment, such as the AIS receiver and the radar device.

The display screen **21** further displays menus, such as menus **208** and **408** as shown in **FIGs. 2** and **4****,** respectively, that may indicate various options selectable or readable by the user relating to the display information, such as the viewpoint. In one embodiment, the display screen **21** is an interactive display and the user may interact with the display screen **21** to change one or more parameters associated with the display information, such as changing the viewpoint. Furthermore, the display screen **21** displays an indicator, such as an indicator **210** and an indicator **410** as shown in **FIGs. 2** and **4****,** respectively, that represents a top view of the region surrounding the ship **11** indicating range circles, other ships in the vicinity, and moving direction of the ship **11.**

It will be understood by a person skilled in the art that display screen **21** may display the planned route **202** and the predicted course **204** having different visual characteristics, such as colors, line width, line type, and the like, such that the user is able to visualize the planned route **202** and the predicted course **204** distinctly and track the deviation between the planned route **202** and the predicted course **204.**

Additionally, or optionally, the error detection module **188** is operably coupled with the course prediction module **185,** and configured to receive the planned route **202** and the predicted course **204.** The error detection module **188** is further configured to detect an error between the planned route **202** and the predicted course **204,** and issue an alert when the detected error exceeds a predetermined threshold. The alert is issued by way of at least one of: a display notification on the display screen **21** and an audio notification on an audio equipment of the user. In one embodiment, the error detection module **188** issues the alert by way of the display notification, such as displaying a predetermined color flashes or blinks, or displaying a message on the display screen **21.** In another embodiment, the error detection module **188** issues the alert by way of the audio notification, such as playing a predetermined tone, a siren, or an automated voice message, by way of the audio equipment, such as speakers, operably coupled with the predicted course display device **1.** The alert is issued to notify the user that the predicted course **204** of the ship **11** is deviating from the planned route **202** and the user is required to adjust the course of the ship **11** to continue navigation on the planned route **202** to reach the destination or the predetermined position.

The autonomous control module **19** is configured to control the ship **11** autonomously. In an embodiment, when the detected error is within a predetermined range, *i.e.,* the deviation between the planned route **202** and the predicted course **204** is significantly small, the course prediction module **185** is further configured to trigger the autonomous control module **19** to control the ship **11** autonomously. In another embodiment, when the detected error is out of the predetermined range, *i.e.,* the deviation between the planned route **202** and the predicted course **204** is significantly high, the course prediction module **185** is further configured to stop the autonomous control module **19** to control the ship **11** autonomously. The autonomous control module **19** may control the ship **11** by navigating the ship **11** based on at least one of: the tidal current information, the heading information, the speed information, the rudder angle information, and the hull information of the ship **11** to reduce the deviation between the planned route **202** and the predicted course **204** of the ship **11.**

In an embodiment, the course information generation module **186** is further configured to generate the display information for showing one or more segments of the planned route **202** such that each segment corresponds to a path between two predetermined positions on the planned route **202.** The predetermined positions may be the way-points on the planned route **202.** In the embodiment, the course prediction module **185** may predict one or more segments of the course **204** corresponding to the one or more segments of the planned route **202,** and the error detection module **188** calculates an error between respective segments of the planned route **202** and the predicted course **204.** Further, the course information generation module **186** may be configured to generate the display information for showing the respective segments of the planned route **202** and the predicted course **204** on the display screen **21.**

Additionally, or optionally, the communication module **20** is configured to receive the display information from the course information generation module **186** and transmit the display information to one or more external devices, for example, a smartphone, a tablet, or the like, to mirror the display shown on the display screen **21** on the one or more external devices. In one embodiment, the communication module **20** transmits the display information to a display screen for a portable computer which is carried by a ship operator's assistant who monitors the surrounding situation from the ship **11,** a display screen for a passenger to watch in the cabin of the ship **11,** or a display part for a head mounted display, such as a wearable glass, worn by a passenger, for showing the planned route **202** and the predicted course **204** corresponding to the specific position.

In the context of the present disclosure, the processing circuitry **18** includes a processor, computer, microcontroller, or other circuitry that controls the operations of various components such as an operation panel, and a memory. The processing circuitry **18** may execute software, firmware, and/or other instructions, for example, that are stored on a volatile or non-volatile memory, or otherwise provided to the processing circuitry **18.**

A scope of the on-board ship equipment (information source for the position measurement module **181** and/or the geographical information selection module **182)** of the predicted course display device **1** is not limited to any of the configurations that have been disclosed herein, and other types of instruments may be included to form part of the on-board ship equipment without limiting the scope of the present disclosure.

Further, the present disclosure is applicable not only to the ship which travels on the sea, but may also be applicable to arbitrary water-surface movable bodies which can travel, for example, on a lake, or a river.

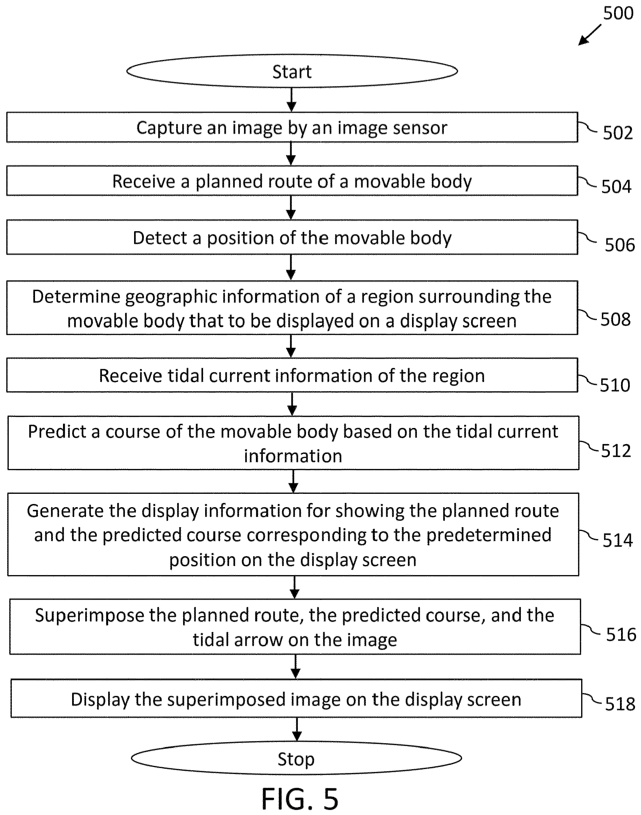

**FIG. 5** is a flowchart illustrating a predicted course display method **500** in accordance with an embodiment of the present disclosure.

At step **502,** the image sensor **10** is configured to capture the image **200,** and output image data.

At step **504,** the interface module **184** is configured to receive the planned route **202** from the user.

At step **506,** the position measurement module **181** is configured to detect the position of the movable body **11.**

At step **508,** the geographical information selection module **182** is configured to determine the geographic information of the region surrounding the ship **11** that is to be displayed on the display screen **21.**

At step **510,** the tidal current information receiving module **183** is configured to receive the tidal current information of the region surrounding the ship **11,** from one of: the external communication equipment and one or more sensors attached to the movable body **11.**

At step **512,** the course prediction module **185** is configured to predict the course **204** of the movable body **11** based on the tidal current information.

At step **514,** the course information generation module **186** is configured to generate the display information for showing the planned route **202** and the predicted course **204** corresponding to the specific position on the display screen **21.**

At step **516,** the course information generation module **186** is further configured to superimpose the planned route **202,** the predicted course **204,** and the tidal arrow **206** on the image **200.**

At step **518,** the course information generation module **186** is configured to generate the display information for displaying the superimposed image **200** on the display screen **21.**

### DESCRIPTION OF REFERENCE CHARACTERS

- 1: Predicted course display device
- 10: Image sensor (camera)
- 11: Movable body (ship)
- 13: Chart information module
- 14: Route planning module
- 15: Parameter detection module
- 16: Hull information module
- 17: Tidal current information generation module
- 18: Processing circuitry
- 180: Image sensor information module
- 181: Position measurement module
- 182: Geographical information selection module
- 183: Tidal current information receiving module
- 184: Interface module
- 185: Course prediction module
- 186: Course information generation module
- 188: Error detection module
- 19: Autonomous control module
- 20: Communication module
- 21: Display screen
- 200: Superimposed Image
- 202: Planned route
- 204: Predicted course
- 206: Tidal arrow
- 302: Compass-based mark
- 402: Grid lines
- 404: Other ships
- 406: Range circles
- 208,408: Menus
- 210,410: Indicator

## Claims

1. A predicted course display device (1) for a movable body (11), comprising:
an interface module (184) configured to receive a planned route (202) of the movable body (11);
a position measurement module (181) configured to detect a current position of the movable body (11);
a geographical information selection module (182) configured to determine geographic information of a region surrounding the movable body (11), wherein the geographic information is to be displayed on a display screen (21);
a tidal current information reception module (183) configured to receive tidal current information of the region surrounding the movable body (11), from one of: an external communication equipment and one or more sensors attached to the movable body (11);
a course prediction module (185) configured to predict a course (204) of the movable body (11) based on the tidal current information; and
a course information generation module (186) configured to generate display information for showing the planned route (202) and the predicted course (204) corresponding to on a specific position on the display screen (21).

2. The predicted course display device (1) of claim 1, wherein:
the course prediction module (185) is further configured to predict the course (204) of the movable body (11) based on the current position of the movable body (11).

3. The predicted course display device (1) of claim 1 or 2, wherein:
the interface module (184) is further configured to receive at least one of: heading information, speed information, rudder angle information, and hull information of the movable body (11); and
the course prediction module (185) is further configured to predict the course (204) of the movable body (11) based on at least one of: the heading information, the speed information, the rudder angle information, and the hull information.

4. The predicted course display device (1) of anyone of claims 1 to 3, wherein:
the course information generation module (186) is configured to generate the display information by superimposing the planned route (202) and the predicted course (204) corresponding to the specific position on the display screen (21).

5. The predicted course display device (1) of anyone of claims 1 to 4, further comprising:
a communication module (20) configured to transmit the display information to one or more external devices.

6. The predicted course display device (1) of anyone of claims 1 to 5, further comprising:
an error detection module (188) configured to detect an error between the planned route (202) and the predicted course (204), and issue an alert when the detected error exceeds a predetermined threshold.

7. The predicted course display device (1) of anyone of claims 1 to 6, further comprising:
an autonomous control module (19) configured to control the movable body (11) autonomously; wherein:
the course prediction module (185) is further configured to trigger the autonomous control module (19) to control the movable body (11) autonomously when the detected error is within a predetermined range.

8. The predicted course display device (1) of anyone of claims 1 to 7, wherein:
the course information generation module (186) is further configured to generate the display information for showing a tidal arrow (206) having a direction indicated by the tidal current information.

9. The predicted course display device (1) of claim 8, wherein:
a length of the tidal arrow (206) displayed is based on a speed of corresponding tidal current information.

10. The predicted course display device (1) of claim 8 or 9, wherein:
the tidal arrow (206) is displayed as a compass-based mark having a direction panel.

11. The predicted course display device (1) of anyone of claims 1 to 10, wherein:
the course information generation module (186) is further configured to generate the display information for showing one or more segments of the planned route (202).

12. The predicted course display device (1) of anyone of claims 1 to 11 further comprising:
the interface module (184) is further configured to receive a viewpoint from a user, wherein:
the course information generation module (186) is further configured to rotate the display information based on the viewpoint.

13. The predicted course display device (1) of anyone of claims 1 to 11, further comprising:
an image sensor (10) attached onto the movable body (11), and configured to capture an image, and output image data, wherein:
the course information generation module (186) is further configured to:
generate display information for showing the planned route (202) and the predicted course (204) corresponding to the image data;
superimpose the image data and the display information to generate a superimposed image based on augmented reality; and
generate display data for displaying the superimposed image on the display screen (21).

14. A predicted course display method (500), comprising:
receiving a planned route (202) of a movable body (11);
detecting a current position of the movable body (11);
determining geographic information of a region surrounding the movable body (11), wherein the geographic information is to be displayed on a display screen (21);
receiving tidal current information of the region surrounding the movable body (11), from one of: an external communication equipment and one or more sensors attached to the movable body (11);
predicting a course (204) of the movable body (11) based on the tidal current information; and
generating display information for showing the planned route (202) and the predicted course (204) corresponding to a specific position on the display screen (21).

15. A non-transitory computer readable medium having stored thereon computer-executable instructions which, when executed by a computer, cause the computer to:
receive a planned route (202) of a movable body (11);
detect a current position of the movable body (11);
determine geographic information of a region surrounding the movable body (11), wherein the geographic information is to be displayed on a display screen (21);
receive tidal current information of the region surrounding the movable body (11), from one of: an external communication equipment and one or more sensors attached to the movable body (11);
predict a course (204) of the movable body (11) based on the tidal current information; and
generate display information for showing the planned route (202) and the predicted course (204) corresponding to a specific position on the display screen (21).
